# EUROPÄISCHE PATENTSCHRIFT

(11) **EP 0 831 443 B1**
(45) Veröffentlichungstag und Bekanntmachung des Hinweises auf die Patenterteilung: **15.05.2002**
(21) Anmeldenummer: 97810698.7
(22) Anmeldetag: 23.09.1997
(51) Int. Cl.: G08B 13/10, F16P 3/12

(54) **Geber für einen elektrischen Schaltkreis**
Sensor for an electric circuit
Capteur pour un circuit électrique

(30) Priorität: 24.09.1996 DE 19639207
(43) Veröffentlichungstag der Anmeldung: 25.03.1998
(73) Patentinhaber: Bircher AG, CH-8222 Beringen (CH)
(72) Erfinder: Lexer, Christoph, 79798 Jestetten (DE); Baumann, Daniel, 8600 Zürich (CH)
(74) Vertreter: Peege, Klaus

(56) Entgegenhaltungen:
- EP-A- 0 077 100
- FR-A- 1 124 476
- FR-A- 2 532 601
- FR-A- 2 534 697
- FR-A- 2 658 305
- US-A- 4 888 581
- US-A- 5 203 110

## Beschreibung

Die Erfindung betrifft einen Geber für ein Schaltgerät nach dem Oberbegriff des Patentanspruches 1.

Insbesondere betrifft die Erfindung einen Geber, ausgebildet als Kontaktmatte, die zusammen mit einem Schaltgerät ein Sicherheitssystem, beispielsweise in Form einer Flächensicherung bildet. Sicherheitssysteme dieser Art dienen der aktiven und passiven Sicherung von Gegenständen, beispielsweise Maschinen, wie Industrieroboterzellen, Holzund Metallbearbeitungsmaschinen etc. Bei Eintritt beispielsweise in den Funktionsbereich einer in Betrieb stehenden Industrieroboterzelle können Personen und Gegenstände ebenso zu Schaden kommen wie auch die Industrieroboterzelle als hochwertiges Wirtschaftsgut. Ein Sicherheitssystem besteht im wesentlichen aus einem Geber (Schalter) in Form einer oder mehrerer elektrisch miteinander verbundener Kontaktmatte(n) und einem Schaltgerät, die zusammen einen elektrischen Stromkreis bilden. Seine Funktionsweise ist die, dass bei Belastung der Kontaktmatte ein Schalter schliesst und der Stromkreis geschlossen wird. Der jetzt fliessende Strom wird vom Schaltgerät in eine Funktionsanweisung, beispielsweise in einen Abschaltbefehl an eine mit dem Schaltgerät in Verbindung stehende maschinelle oder sonstige Einrichtung wie Abschrankungen etc., umgesetzt.

Sicherheitssysteme (folgend auch Schalteinrichtungen genannt) sind bekannt, auf einen hohen technischen Entwicklungsstand gebracht und haben sich in ihren derzeit vorherrschenden Ausführungsformen entsprechend bewährt. In der britischen Patentanmeldung GB 2261 115A ist ein Sicherheitssystem in vorherrschend bekannter Ausführung beschrieben. Die dort gezeigte Schalteinrichtung umfasst eine auf Druck ansprechende Kontaktmatte, die zur Bildung eines elektrischen Stromkreises mit einem Schaltgerät verbindbar ist. Bei der bekannten Kontaktmatte handelt es sich wie auch im Falle der Erfindung um eine sogenannte Hohlkontaktmatte, also um eine Kontaktmatte, deren Wandungen einen geschlossenen Hohlraum umschliessen (Hohlkontaktmatten folgend auch Matten genannt), in dem gemäss genannter britischen Patentanmeldung ein elektrischer Schalter, umfassend zwei Schaltelemente, aufgenommen ist. Wird die bekannte Matte belastet, gelangen die Schaltelemente zur gegenseitigen Anlage, wobei bei Entlastung elektrisch nicht leitende Federn die Schaltelemente in ihre beabstandete Ausgangslage zurückführen. Die Matte nach der genannten britischen Druckschrift lässt augenfällig werden, dass für eine zuverlässige Funktionsweise der Matte, insbesondere des Schalters in der Matte die Integrität der Matte (Unversehrtheit ihrer Wandungsteile) und des Hohlraumes (Freiheit von schalterfunktionsfremden Einschlüssen im Hohlraum) von entscheidender Bedeutung sind. Integrität der Matte, des Hohlraumes und der Funktionsfähigkeit des Schalters müssen insbesondere bei rauhem industriellen Dauereinsatz von Matten Gegenstand von Überprüfungen sein, wenn man plötzliche Funktionsunfähigkeit von Matten mit den daraus fliessenden Folgen vermeiden will. Die Integrität der Matte kann beispielsweise durch Beschädigung (Reissen, Perforation etc.) einer oder mehrerer Wandungsteile, die des Hohlraumes durch einen so ermöglichten Eintritt von Fremdstoffen (Wasser, Farben etc.) beeinträchtigt werden, wobei insbesondere letztere die Funktionsfähigkeit des Schalters aufheben oder herabsetzen. Diese bei den bekannten Matten mithin notwendigerweise vorzunehmenden Überprüfungen, deren Ergebnisse für einen bestimmten in die Zukunft gerichteten Zeitraum Bestand haben sollten, haben sich als solche für vorbestimmte, gewöhnliche, d.h. normalerweise auftretende Belastungszustände bewährt, nicht jedoch für unerwartete aussergewöhnliche Belastungszustände. Letztere - ein Beispiel wäre Überfahren einer Matte mit einem überschweren Fahrzeug - könnten eine Matte kurz nach deren ordnungsgemässen Funktionsüberprüfung beschädigen, ohne dass diese Schäden bis zum nächsten Prüfungstermin bemerkt würden, ein Zustand, der zur plötzlichen oder allmählich eintretenden Funktionsunfähigkeit der Matte führen kann. Gegen diese Gefährdung eines Sicherheitssystems ist es bekannt, in einer letzten Matte einer Mattenlinie (d.h. Signalgeberlinie) einen definierten elektrischen Widerstand vorzusehen, der es erlaubt, die Zustände der Matten, d.h. ihre Funktionsfähigkeit nicht periodisch sondern permanent zu überwachen. Diese Art der elektrischen Überwachung setzt elektrische Einrichtungen voraus, die ihrerseits wieder periodisch auf ihre Funktionsfähigkeit zu prüfen sind. Neben der funktionalen Sicherheit (Schaltsicherheit) sollte eine Matte auch eine statische Sicherheit aufweisen. Unter statischer Sicherheit einer Matte wird die Fähigkeit einer Matte verstanden, bei Inbetriebsetzung eines sie einschliessenden Sicherheitssystems zu erkennen, ob sie unter Last steht oder nicht, um entsprechende Signale an ein Schaltgerät zu senden. Diese Fähigkeit ist für die Sicherheit von Personen oder Gegenständen bei Inbetriebnahme eines geschützten Systems wichtig, da nur so für das System erkennbar wird, ob sich eine Person oder Sache auf der Matte befindet, d.h. die Matte unter Last steht, um diesem Lastzustand entsprechend zu schalten.

Hiervon ausgehend ist Aufgabe der Erfindung, eine Matte einfachen Aufbaues zu schaffen, die sich durch statische Sicherheit und die Fähigkeit auszeichnet, selbst ihre Funktionsfähigkeit permanent zu überwachen, und die Aufgabe wird vermittels der kennzeichnenden Merkmale des Patentanspruches 1 gelöst.

Die erfindungsgemässe Lehre verlässt den Stand der Technik, der sich bei Matten durch passive Schalter bzw. Schaltelemente kennzeichnet, indem sie letzere durch aktive Schaltelemente ersetzt. Unter passiven Schaltern bzw. Schaltelementen werden hier solche verstanden, bei denen Bewegungen für eine Schaltfunktion ausgelöst werden müssen, während erfindungsgemäss aktive Schalter in ständiger Bewegung gehalten sind und Schaltfunktion durch Änderungen eines Bewegungszustandes auslösen.

Gemäss der Erfindung kommt als aktiver Schalter bzw. Schaltelement (folgend gemeinsam Schalter genannt), im Hohlraum der Matte aufgenommen, ein anregbarer Schwingkörper zur Anwendung, der zu Schwingungen bestimmter Frequenzen und Amplituden angeregt wird, wobei Änderungen dieser Schwingungsparameter beispielsweise als Folge von Dämpfungen, als Schaltsignale benutzt werden. Wird eine unbeschädigte Matte mit in ihrem Hohlraum befindlichem Schwingkörper mit einer Last belegt, so werden die Schwingungen gedämpft und die damit einhergehenden Parameteränderungen lösen ein Schaltsignal aus. Ist eine unbelastete Mattehülle beschädigt und gelangen Fremdkörper in den Hohlraum und in Kontakt mit dem Schwingkörper, so löst der Kontakt des Schwingkörpers mit dem Fremdkörper eine Dämpfung des Schwingkörpers aus, wobei die Änderungen der Schwingungsparameter als Signal anzeigen, dass die Funktionsfähigkeit des Schwingkörpers und damit der Matte beeinträchtigt ist. Bei unbelasteter, intakter Mattenhülle und beschädigtem Schwingkörper, beispielsweise durch Überfahren mit einer Überlast, ändern sich die Schwingungsparameter, was gleichermassen zu einem Signal umgesetzt wird. Die erfindungsgemäss ausgebildete Matte nützt somit durch Dämpfung ausgelöste Änderungen der Schwingungsparameter zur Erzeugung eines Schaltsignales für das Sicherheitssystem und zur ständigen Selbstüberwachung seiner Funktionsfähigkeit. Die erfindungsgemäss ausgebildete Matte erfüllt auch die Forderung der statischen Sicherheit, da sie nicht nur aufgrund einer Änderung der Schwingungsparameter durch Dämpfung bei Belastung einen Schaltvorgang auslöst, sondern als Folge eines Dämpfungsvorganges auch erkennt, ob etwas auf ihr steht, wenn ein sie einschliessendes Sicherheitssystem in Betrieb genommen wird. Die erfindungsgemässe Matte erfüllt so mit einfachen mechanischen Mitteln und dem Wirkungsprinzip der Verwertung von Schwingungsparameter -Änderungen die ihr zugedachte Schaltfunktion bei statischer Sicherheit, wobei die Matte das gleiche Wirkungsprinzip für die ständige Selbstüberwachung ihrer Funktionsfähigkeit anwendet.

Vorteilhafte Ausgestaltungen ergeben sich aus den Merkmalen der dem Patentanspruch 1 folgenden Patentansprüche.

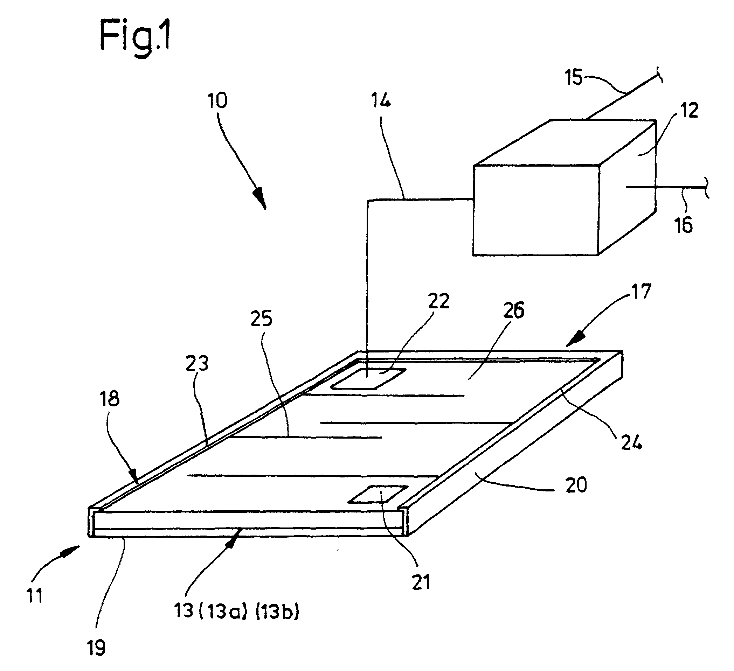

Weitere Vorteile, Merkmale und Einzelheiten der Erfindung ergeben sich aus der folgenden Beschreibung eines bevorzugten Ausführungsbeispieles und der Zeichnung, es zeigt
- Fig. 1: in perspektivischer und schematischer Darstellung einen erfindungsgemässen Geber, der mit einem Schaltgerät zusammen wirkt.

Figur 1 zeigt einen Geber 11 und ein mit dem Geber 11 zusammenwirkendes Schaltgerät 12, die zusammen ein Sicherheitssystem 10 bilden. Das Schaltgerät 12 ist nicht Teil der Erfindung, es hat bekanntermassen die Aufgabe, vom Geber 11 ausgehende Signale in Befehle für die Schaltung nachgeordneter Einrichtungen umzuwandeln. Im Falle der Erfindung, bei der Änderungen der Schwingungsparameter als Stellgrösse oder Signal ausgewertet werden, umfasst das Schaltgerät 12 eine redundante elektronische Schaltung, die beispielsweise Änderungen der Schwingungsamplituden eines Signalbildners 13 auswertet und zur Formulierung und Ausführung von Schaltbefehlen weitergibt. Die Wirkverbindung zwischen Geber 11 bzw. dem in ihm aufgenommenen Signalbildner 13 ist durch die Verbindungsleitung 14 schematisch angedeutet. Mit elektrischem Eingang 15 und Ausgang 16 ist angedeutet, dass das Schaltgerät 12 ohne den Geber 11 einen elektrischen Stromkreis zur Schaltung nachgeordneter Einrichtungen (nicht gezeigt) bildet, wobei der Geber 11 vom Schaltgerät 12 das notwendige Signal zur Schwingungserzeugung erhält.

Der erfindungsgemässe Geber 11 umfasst eine Hülle 17 mit einem Hohlraum 18, der von zwei beabstandeten Deckflächen 19 (eine Deckfläche 19 ist nicht gezeigt), beabstandet gehalten von einer, den Umfang der Deckfläche 19 umlaufenden Wandung 20 gebildet ist. Deckflächen 19 und Wandung 20 bestehen aus einem elastischen Werkstoff, vorzugsweise einem Kunststoff. Deckflächen und Wandungen haben eine Stärke von 3 bis 10 mm, vorzugsweise 3 bis 5 mm. Hüllen 17 mit dieser Wandungsdimensionierung kennzeichnen sich durch gute Standzeiten und leisten damit einen entscheidenden Beitrag an die Forderung, dass ein Geber 11, d.h. eine Matte 11 nach der Erfindung eine Gesamtdicke von weniger als 10 mm haben soll, dies aus Gründen der Funktionszuverlässigkeit und des Überfahrkomforts. In den Hohlraum 18 ist der Signalbildner 13, von den miteinander verbundenen Deckflächen 19 und der Wandung 20 allseits umschlossen, d.h. abgedichtet eingebracht, wobei die Dimensionierung zwischen Abmessungen des Hohlraumes 18 und den des Signalbildners 13 so bemessen ist, dass der Signalbildner 13 im Hohlraum 18 ggfs unter Einschluss von komprimierbarem Füllmaterial ihm zugedachte Bewegungen ausführen kann. Gemäss der Erfindung ist der Signalbildner 13 als ein Schwingkörper 13a nach einer Weiterbildung der Erfindung bevorzugt als eine Platte 13b ausgebildet. Wie aus Fig. 1 ersichtlich, ist die Platte 13b mit einem Schwingungserreger (Aktor) 21 und einem Schwingungsaufnehmer (Sensor) 22 versehen. Bevorzugt nach der Erfindung ist Aktor 21 und Sensor 22 in einer gewissen Distanz (Aktor 21 am Anfang und Sensor am Ende eines Schwingungspfades) zueinander, beispielsweise auf einer zwei Ecken der Platte 13b verbindenden Linie, anzuordnen. Grundsätzlich ist der Aktor 21 am Anfang und der Sensor 22 am Ende eines Schwingkörpers vorzusehen. Mit einer dieser Anordnungen von Aktor 21 und Sensor 22 liessen sich Darstellung und Messung von Schwingungen der Platte 13b und durch Dämpfung (ausgelöst durch Betreten oder Befahren der Matte 11) verursachte Änderungen der Schwingungsparameter am reproduzierbarsten durch den Sensor 22 aufnehmen. Sehr gute, d.h. gleichförmige Anregung der Platte 13b und Aufnahme der Schwingungsveränderungen im Belastungsfall werden gemäss der Erfindung erreicht, wenn die Platte 13b (d.h. der Signalbildner) so ausgebildet ist, dass geführte Schwingungen dank einer speziellen Formgebung der Platte 13b möglich werden. Zu diesem Zweck ist die Platte 13b idealisiert als ein in eine Ebene gelegter Balken (Schwingbalken) ausgebildet. Aus konstruktiven Gründen (Grösse, d.h. flächige Abmessung der Platte) ist der Balken in miteinander einends verbundene, vorzugsweise mechanisch verbundene Teilstücke, d.h. Plattenstreifen 26 aufgeteilt, die bezüglich einer den so aufgeteilten Balken (die Teilstücke liegen nebeneinander) durchlaufenden Schwingung in Wirkverbindung stehen, so dass so ein sogenannter Schwingungspfad mit einem Anfang und Ende gebildet wird. Für eine gleichförmige Schwingungsanregung der Platte 13b hat sich als Aktor 21 ein auf dem piezoelektrischen Prinzip beruhendes Element als vorteilhaft erwiesen, das auf der Platte 13b wie der Sensor 22 aufgeklebt sein kann.

Die umlaufende Wandung 20 einschliesslich ihrer Verbindung mit den Deckflächen 19 lassen eine die Deckflächen 19 aussen umlaufende "Totzone" in Form eines umlaufenden Streifens entstehen, innerhalb der eine Matte 11 auf Belastungen nicht anspricht. Diese Totzonen vergrössern sich (d.h. die Streifen werden breiter), wenn Matten 11 aneinandergereiht werden, wobei die Totzonen-Problematik besonders akut wird an den Stellen, an denen beispielsweise die Ecken von vier Matten 11 zusammentreffen. Diesen Totzonen wird erfindungsgemäss in ihren Auswirkungen dadurch entgegengewirkt, wenn die aneinander grenzenden umlaufenden Wandungen 20 aus komprimierbarem Werkstoff ausgebildet sind.

Eine erfindungsgemäss ausgebildete Matte 11 zeigt die ihr zugedachte Funktionsweise in stetiger, verlässlicher Form bereits dann, wenn die Platte 13b mindestens drei nebeneinanderliegende Plattenstreifen 26 aufweist und Schwingungserreger 21 und Schwingungsaufnehmer 22 an den freischwingenden, eine Plattenecke einschliessenden, einander diagonal gegenüberliegenden Enden der Plattenstreifen 26 angeordnet sind. Aufgrund dieser Ausführung kann der Aktor 21 den Streifen, auf dem er sich befindet, zu Schwingungen anregen, diese setzen sich über einen zweiten Streifen fort und werden am Ende des dritten Streifens vom Sensor 22 aufgenommen und bezüglich ihrer Schwingungsparameter überprüft. Liegen die Schwingungsparameter am Sensor 22 in gleichen Grössenordnungen wie ausgehend vom Aktor 21, dann liegt keine Dämpfung der Schwingungen vor, in die Funktion der Matte übersetzt bedeutet dies, die Matte 11 ist unbelastet, der Hohlraum ist intakt, d.h. er enthält keine artfremden Einschlüsse wie Wasser, Eis etc. und bei Einschalten des Sicherheitssystems würde - durch ausgelöste Dämpfung - die Matte 11 sofort anzeigen, ob sie durch eine Person oder Sache belastet ist. Stimmen die Parameter zwischen Aktor 21 und Sensor 22 nicht überein, dann liegt bedingt durch Belastung der Matte und / oder durch Vorhandensein von Fremdkörpern eine Dämpfung vor, wobei die Differenz der Parameter (z.B. Amplitude oder Frequenz oder beide) als Basis für das Auslösen eines Schaltsignales verwendet wird.

Zweckmässig für die Erfindung ist als vom Aktor 21 ausgehendes Signal, d.h. als Anregungssignal eine Eigenschwingung der Platte 13b, d.h. als eine nach der Erfindung geführte Schwingung, den in einer Ebene liegenden Balken bzw. dessen nebeneinanderliegenden Teilstücke über deren jeweiligen Verbindungen nacheinander durchlaufend zu verwenden, weil damit ein gutes Übertragungsverhältnis erreicht wird. Zusätzlich erhöht sich die Sicherheit, wenn man eine bestimmte Frequenz anregt und zur Auswertung auch nur diese Frequenz verwendet.

## Patentansprüche

1. Geber (11) für ein Schaltgerät (12) umfassend eine aus einem elastischen Werkstoff gebildete Hülle (17), gebildet aus zwei vermittels einer umlaufenden Wandung (20) beabstandet zueinander gehaltenen Deckflächen (19) und einen auf Druckbelastungen ansprechenden Signalbildner (13), der im Belastungsfall mit mindestens einer Deckfläche (19) zusammenwirkend zwischen den Deckflächen (19) angeordnet ist, **dadurch gekennzeichnet, dass** der Signalbildner (13) als ein anregbarer Schwingkörper (13a) ausgebildet ist.

2. Geber nach Anspruch 1, **dadurch gekennzeichnet, dass** der Schwingkörper (13a) als eine Platte (13b) ausgebildet ist.

3. Geber nach Anspruch 2, **dadurch gekennzeichnet, dass** die Platte (13b) von zwei ihrer gegenüberliegenden Seiten (23, 24) abwechselnd ausgehende, einen Abstand zwischen den Seiten (23, 24) nur teilweise durchgreifende, über die Platte (13c) gleichbeabstandete Schlitze (25), so nebeneinander liegende und miteinander abwechselnd einends verbundene, gesamthaft einen Schwingungspfad bildende Teilstücke (26) aufweist.

4. Geber nach Anspruch 3, **dadurch gekennzeichnet, dass** die Platte (13b) mindestens drei nebeneinanderliegende Plattenstreifen (26) bildende Schlitze (25) aufweist und ein Schwingungserreger (21) an einem freischwingenden Ende eines ersten Plattenstreifens (26) und ein Schwingungsaufnehmer an einem freischwingenden Ende eines folgenden Plattenstreifens (26) angeordnet sind.

5. Geber nach Anspruch 4, **dadurch gekennzeichnet, dass** der Schwingungserreger (21) und der Schwingungsaufnehmer zueinander diagonal versetzt auf der Platte (13b) angeordnet sind.

6. Geber nach einem der Ansprüche 4 oder 5, **dadurch gekennzeichnet, dass** der Schwingungserreger als ein auf dem piezoelektrischen Wirkungsprinzip arbeitendes Element ist.

## Claims

1. A transmitter (11) for a switch (12) comprising a casing (17) of elastic material consisting of two top surfaces (19) spaced apart by a wall (20) running around the circumference of said top surfaces (19) and a signal generator (13) reactive upon pressure loads which is arranged between said top surfaces (19) and being responsive with at least one top surface (19) **characterised thereby that** the signal generator (13) is formed as promptable oscillator (13a).

2. Transmitter according to claim 1, **characterised thereby that** the oscillator (13a) is formed as a plate (13b).

3. Transmitter according to claim 2, **characterised thereby that** the plate (13b) consists of partial segments (26) forming an oscillation path, said partial segments (26) in alternating mode extending from two of said plate's (13b) opposite sides (23, 24) leaving a spacing between said sides (23, 24) and forming slots (25) of equal distance which slots (25) only partially extend over said partial segments (26) so that said partial segments (26) are in a side by side position and at one end altematingly connected.

4. Transmitter according to claim 3, **characterised thereby that** slots (25) are provided so that the plate (13b) comprises at least three partial segments (26) and that an oscillation generator (21) is arranged upon a freely oscillating end of a first partial segment and that an oscillation pick-up (22) is arranged upon the freely oscillation end of a following partial segment (26.)

5. Transmitter according to claim 4, **characterised thereby that** the oscillation generator (21) and the oscillation pick-up (22) are arranged upon the plate (13b) in a diagonally staggered position to each other.

6. Transmitter according to one of the claims 1 to 5, **characterised that** the oscillation generator (21) is an element functioning according to the piezoelectrical action principle.

## Revendications

1. Emetteur (11) pour un appareil de distribution (12), comprenant une gaine (17) en matériau élastique, formée par deux surfaces de protection (19) maintenues éloignées l'une de l'autre au moyen d'une paroi périphérique (20) et un générateur de signaux (13) activé par des sollicitations de pression, lequel, coopérant avec au moins une des surfaces de protection (19) en cas de sollicitation, est disposé entre les surfaces de protection (19), **caractérisé en ce que** le générateur de signaux (13) est conçu sous forme de corps oscillant (13a) activable.

2. Émetteur selon la revendication 1, **caractérisé en ce que** le corps oscillant (13a) est conçu sous forme de plaque (13b).

3. Émetteur selon la revendication 2, **caractérisé en ce que** la plaque (13b) comporte des fentes (25) qui s'amorcent en alternance sur l'un et l'autre de ses deux côtés opposés (23, 24) et s'étendent sur la plaque (13c) en partie seulement en laissant une distance par rapport aux côtés (23, 24) et en étant disposées à distance égale les unes des autres, formant des zones partielles (26) ainsi juxtaposées et assemblées les unes aux autres en alternance sur une extrémité, formant ensemble une voie d'oscillation.

4. Émetteur selon la revendication 3, **caractérisé en ce que** la plaque (13b) comporte au moins trois fentes (25) formant les bandes juxtaposées (26) et un générateur d'oscillations (21) est disposé sur une extrémité à oscillation libre d'une première bande de la plaque (26) et un récepteur d'oscillations est disposé sur une extrémité à oscillation libre d'une bande (26) consécutive de la plaque.

5. Émetteur selon la revendication 4, **caractérisé en ce que** le générateur d'oscillations (21) et le récepteur d'oscillations sont décalés en diagonale l'un par rapport à l'autre sur la plaque (13b).

6. Émetteur selon la revendication 4 ou 5, **caractérisé en ce que** le générateur d'oscillations est conçu sous forme d'élément fonctionnant selon le principe d'un effet piézoélectrique.
